# FASCICULE DE BREVET EUROPEEN

(11) **EP 2 405 249 B1**
(45) Date de publication et mention de la délivrance du brevet: **20.12.2017**
(21) Numéro de dépôt: 11305836.6
(22) Date de dépôt: 29.06.2011
(51) Int. Cl.: G01M 13/04

(54) **Dispositif pour tester l'influence de courants de fuite sur la durée de vie de roulements de moteurs électriques**
Vorrichtung zur Prüfung des Einflusses von leckströmen auf die Lebensdauer von Lagern eines elektrischen Antriebs
Apparatus for testing the influence of leakage currents on the lifespan of electric drive bearings

(30) Priorité: 07.07.2010 FR 1055512
(43) Date de publication de la demande: 11.01.2012
(73) Titulaire: ALSTOM Transport Technologies, 93400 Saint-Ouen (FR)
(72) Inventeur: Laitem, Claude, 25290 Chassagne St Denis (FR); Boualem, Benali, 25660 Saone (FR)
(74) Mandataire: Lavoix

(56) Documents cités:
- PRASHAD HAR: "EFFECT OF OPERATING PARAMETERS ON THE THRESHOLD VOLTAGES AND IMPEDANCE RESPONSE OF NON-INSULATED ROLLING ELEMENT BEARINGS UNDER THE ACTION OF ELECTRICAL CURRENTS.", WEAR, vol. 117, no. 2, 15 juin 1987 (1987-06-15) , pages 223-240, XP002613658, DOI: 10.1016/0043-1648(87)90257-2
- KEMPSKI A: "Capacity coupled discharging currents in bearings of induction motor fed from PWM (pulsewidth modulation)inverters", JOURNAL OF ELECTROSTATICS MAY 2001 ELSEVIER NL, vol. 51-52, no. 1-4, mai 2001 (2001-05), pages 416-423, XP002613663, DOI: DOI:10.1016/S0304-3886(01)00039-0

## Description

La présente invention est relative à des tests de l'influence de courants électriques de fuite sur la durée de vie de roulements destinés à des moteurs électriques, et notamment des moteurs électriques alimentés par des onduleurs.

Les roulements des moteurs électriques synchrones ou asynchrones sont soumis à des dégradations qui résultent de passages de courants électriques de fuite. Ces courants électriques de fuite peuvent résulter de dissymétrie dans la structure des circuits magnétiques du moteur ou de l'alimentation du moteur par des onduleurs. Lorsque les courants sont générés par des dissymétries du circuit magnétique, les courants qui traversent les roulements ont des fréquences basses de quelques kHz. Lorsque les moteurs sont alimentés par des onduleurs, les courants de fuite ont des fréquences beaucoup plus élevées pouvant atteindre 100kHz, voire quelques MHz (cf. Kempsi A: "Capacity coupled discharging currents in bearings of induction motor fed from PWM (pulsewidth modulation)inverters", JOURNAL OF ELECTROSTATICS May 2001 ELSEVIER NL, vol. 51-52, no. 1-4, pages 416-423). En général, ces deux types de courants sont présents simultanément dans les moteurs et il est nécessaire de protéger les roulements contre les dégradations résultant de ces courants. Pour cela, on peut utiliser des roulements isolés électriquement qui annulent complètement le passage des courants en basse fréquence. Mais ces isolations ont un comportement capacitif de sorte que les courants haute fréquence continuent à traverser les roulements continuent donc de détériorer les roulements et ainsi de diminuer la durée de vie des moteurs. A l'heure actuelle, il n'y a pas de règle établie ou de critère permettant d'évaluer à priori la durée de vie des roulements soumis à de tels courants de fuite. Aussi, il est souhaitable de pouvoir étudier l'influence de ces courants électriques sur la durée de vie des roulements en fonction, notamment, de la charge à laquelle est soumis le roulement et à sa température de fonctionnement. Pour faire de telles études, il est en principe possible d'utiliser les moteurs pour lesquels on souhaite déterminer la durée de vie et de les faire tourner pendant une longue période sur des bancs d'essai ou les soumettant à des efforts importants. Mais cette façon de procéder présente l'inconvénient de nécessiter des équipements très lourds et de demander des temps d'essai très longs.

Il existe bien des bancs d'essai de moteurs électriques destinés à étudier l'endurance des roulements de moteurs électriques. Mais de tels bancs d'essai ne prennent en compte que les sollicitations mécaniques. Aussi, ils ne permettent pas de déterminer l'incidence des courants électriques de fuite sur la durée de ces roulements.

La publication de Har Prashad: "EFFECT OF OPERATING PARAMETERS ON THE THRESHOLD VOLTAGES AND IMPEDANCE RESPONSE OF NON-INSULATED ROLLING ELEMENT BEARINGS UNDER THE ACTION OF ELECTRICAL CURRENTS.",WEAR, vol. 117, no. 2, 15 juin 1987, pages 223-240, divulgue un banc d'essais permettant de soumettre un roulement à des courants électriques sinusoïdaux et à des charges mécaniques. Le but de la présente invention est de remédier à ces inconvénients en proposant un moyen pour étudier l'influence des courants de fuite sur la durée de vie des roulements de moteurs électriques notamment lorsque ces roulements sont soumis à des charges, et ainsi faire des essais d'endurance qui peuvent avoir une durée réduite par rapport aux essais en vraie grandeur sur des moteurs.

L'invention est également adaptée pour étudier la durée de vie de roulements destinés à équiper des essieux, des ponts de transmission ou des boites d'essieu, qui voient également passer des courants parasites.

A cet effet l'invention a pour objet un dispositif selon la revendication 1.

De préférence, le dispositif comprend au moins un moyen de mesure de vibrations et un moyen de mesure de température disposés sur le palier destiné à recevoir un roulement.

De préférence, le moyen pour générer des impulsions est adapté pour générer des impulsions de tension réglables entre 0 et 100 V, de préférence 30V, et il est relié à un circuit électrique permettant d'engendrer une tension entre un palier et l'arbre d'entraînement du roulement et comprenant un moyen de réglage de l'impédance.

De préférence, le dispositif comprend un moyen pour exercer un effort radial sur l'arbre d'entraînement du roulement et/ou un moyen pour exercer un effort axial sur l'arbre d'entraînement du roulement.

De préférence, if comporte deux paliers de réception d'un roulement de moteur électrique et en ce que le moyen pour générer des impulsions de courant électrique est adapté pour faire circuler des impulsions électriques entre les paliers en passant à travers les roulements et dans l'arbre d'entraînement en rotation des roulements.

De préférence, le circuit électrique reliant les paliers au générateur d'impulsion comprend au moins une portion linéaire s'étendant parallèlement à l'arbre d'entraînement des roulements et adaptée pour minimiser la self du circuit électrique.

De préférence, le dispositif comprend des moyens d'enregistrement des impulsions électriques, des vibrations des paliers, de la température des paliers, des efforts radiaux et/ou axiaux, de l'intensité, de la tension de la durée et de la fréquence des impulsions et au moins un moyen de commande de générateur d'impulsion, du moteur d'entraînement et, éventuellement, des moyens pour exercer des efforts radiaux et/ou axiaux.

L'invention concerne également un procédé pour tester l'influence d'un courant de fuite sur la durée de vie d'un roulement de moteur électrique, selon lequel on monte au moins un roulement sur un dispositif selon l'invention, on met en route le moteur d'entraînement, on génère des impulsions de courant électrique en ajustant l'amplitude des impulsions de tension pour que la tension entre un palier et l'arbre d'entraînement de roulement soit supérieure à la tension de claquage du roulement, et en ajustant l'impédance du circuit d'alimentation électrique du palier et de l'arbre d'entraînement, on engendre éventuellement un effort radial et/ou un effort axial sur l'arbre d'entraînement, on enregistre les vibrations et la température du ou des paliers et on détermine le temps au bout duquel l'intensité des vibrations et/ou la température dépasse un seuil fixé à l'avance.

Le dispositif et le procédé selon l'invention permettent ainsi de soumettre des roulements à des essais en charge mécanique et électrique. La possibilité de régler les caractéristiques des charges électriques permet d'ajuster l'intensité et la fréquence des impulsions électriques qui traversent le moteur. Cette possibilité a l'avantage de permettre de réduire les temps nécessaires pour pouvoir tester la durée de vie des roulements par rapport au temps réel de fonctionnement d'un moteur.

L'invention va maintenant être décrite de façon plus précise, mais non limitative, en regard des figures annexées dans lesquelles :
- la Figure 1 est un schéma général d'un banc d'essai de l'endurance de roulements de moteurs électriques soumis à des efforts mécaniques et à des sollicitations électriques.
- la Figure 2 est une vue agrandie partielle du circuit d'alimentation en impulsions électriques des paliers supports de roulements à tester sur un banc d'essai de la Figure 1.
- la Figure 3 est une représentation schématique des impulsions en tension et en courant utilisées pour solliciter électriquement les roulements testés sur le banc d'essai de la Figure 1.

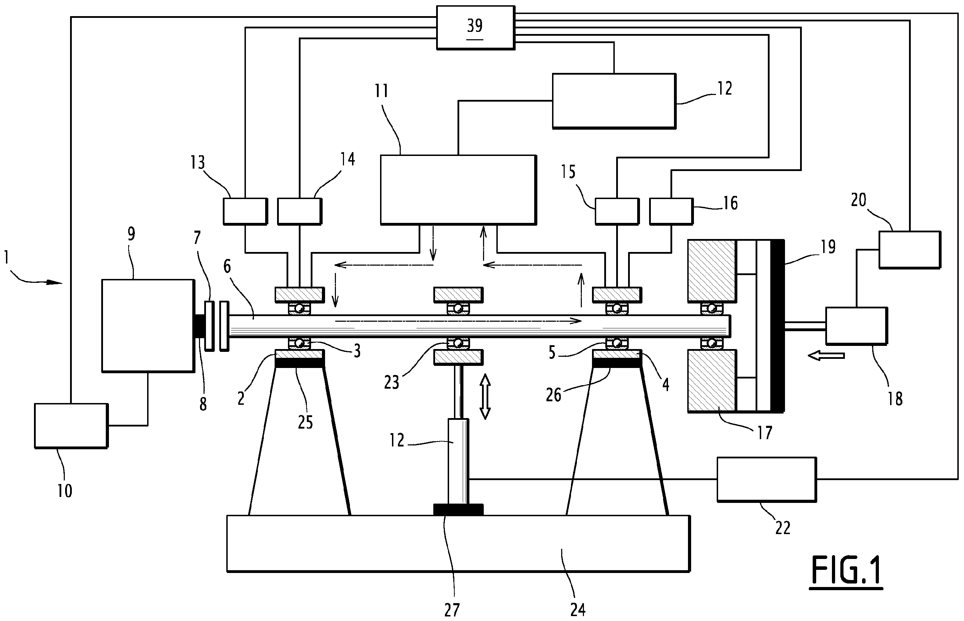

Le dispositif, ou banc d'essai, repéré généralement par 1 à la Figure 1, comprend un premier palier 2 destiné à recevoir un premier roulement à tester 3 et un deuxième palier 4 destiné à recevoir un deuxième roulement à tester 5. Le dispositif comprend un arbre 6 d'entraînement en rotation des roulements qui est adapté pour coopérer avec les bagues internes des roulements à tester 3 et 5. Cet arbre est entraîné en rotation par un moteur électrique 9 à vitesse variable par l'intermédiaire d'un moyen d'embrayage 7 comprenant un moyen de connexion mécanique assurant une isolation électrique 8. Le moteur est alimenté et piloté par un moyen d'alimentation et de pilotage en vitesse 10 connu en lui-même de l'homme du métier. Les deux paliers 2 et 4 sont montés sur un bâti 24 par l'intermédiaire d'isolants électriques 25 et 26. Ils sont reliés à un générateur d'impulsions électriques 11 piloté par un dispositif de pilotage 12 du générateur d'impulsions électriques. Le générateur d'impulsions, connu en lui-même, est adapté pour pouvoir fournir des impulsions de courant ayant une forme sinusoïdale amortie ou constituée d'une série d'impulsions de type triangle. La fréquence des impulsions de courant est réglable et peut atteindre 10 MHz. Lorsque l'alimentation génère des impulsions de type triangle, le temps de montée du courant électrique est inférieur à 5 microsecondes. L'amplitude des pics d'impulsions est réglable entre 0 et 30A et la fréquence de ces impulsions est réglable entre 0 et 500kHz. Le générateur d'impulsions est adapté pour que la tension appliquée entre les deux roulements soit réglable entre 0 et 100 V. De façon plus précise, cette tension est déterminée de façon à ce que la tension entre un roulement et l'arbre d'entraînement soit supérieure à la tension de claquage du roulement.

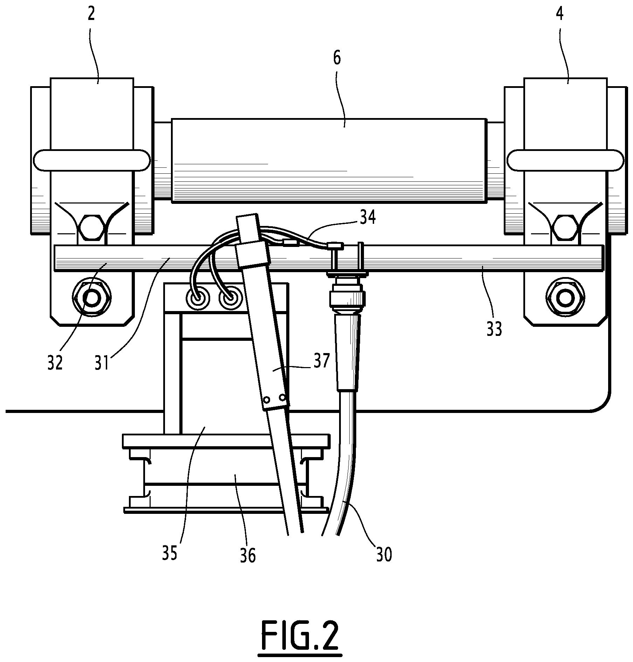

Comme on voit sur la Figure 2, les deux paliers 2 et 4 sont reliés au générateur d'impulsions par un moyen de connexion qui comprend, d'une part, un câble coaxial 30 relié au générateur électrique et, d'autre part, une barre d'alimentation en courant 31 parallèle à l'arbre 6, située très proche des deux paliers 2 et 4, et divisée en deux segments 32 et 33. L'alimentation par le câble coaxial 30 arrive à peu près au milieu de la barre de connexion 31. Elle est connectée directement à un premier segment 33 de la barre de connexion 31 et au deuxième segment 32 par l'intermédiaire d'un rhéostat 35 refroidi par un ventilateur 36 et relié au circuit électrique par des conducteurs 34. Sur cette barre d'alimentation est implantée une pince ampère métrique 37. Cette disposition d'une barre conductrice parallèle à l'arbre, et très proche de celui-ci, a l'avantage de réduire au minimum la self du circuit électrique à travers lequel passent les impulsions de courant.

Du fait de la présence du rhéostat, le circuit électrique qui permet de générer une tension électrique entre un palier et l'arbre d'entraînement comporte un moyen de réglage de l'impédance, ce qui permet de régler l'intensité des courants résultant de la tension générée.

Outre l'alimentation en impulsions électriques, le banc d'essai comporte un premier moyen pour exercer un effort axial sur l'arbre d'entraînement des roulements. Ce moyen est constitué d'une part d'un palier d'extrémité 17 relié à un vérin 18 par l'intermédiaire d'un moyen de liaison isolant électrique 19. Le vérin 18 adapté pour exercer un effort axial sur l'arbre d'entraînement des roulements, comporte un moyen d'alimentation et de pilotage 20. Ce moyen d'alimentation et de pilotage est par exemple une centrale hydraulique qui est connue en elle-même de l'homme du métier.

Le banc d'essai comporte également un deuxième moyen pour exercer un effort radial sur l'arbre d'entraînement des roulements. Ce moyen comporte un palier 23 traversé par l'arbre 6 et situé à peu près à mi-distance entre les deux paliers 2 et 4 destinés à recevoir les roulements à tester. Ce palier 23 peut être soumis à des efforts radiaux à l'aide d'un vérin 12 qui repose sur le bâti 24 par l'intermédiaire d'un moyen isolant électrique 27. Le vérin radial 12 est également alimenté par des moyens d'alimentation et de pilotage 22 qui sont par exemple une centrale hydraulique.

Afin de suivre les conditions de fonctionnement des roulements en essai, les paliers 2 et 4 comportent chacun un moyen de mesure d'accélération 13 et 15 respectivement permettant de mesurer l'intensité des vibrations des roulements. Cette mesure de l'intensité des vibrations du roulement permet de détecter le degré d'usure des roulements, et donc de détecter l'instant où les roulements sont considérés comme étant hors service. Les paliers 2 et 4 comportent également des moyens de mesure de température 14 et 16 respectivement qui permettent de déterminer les conditions de température de fonctionnement des roulements.

Outre les mesures de température et d'intensité de vibration des paliers, le banc d'essai comporte des moyens de mesure de la vitesse de rotation, des caractéristiques électriques des impulsions, du nombre d'impulsions qui ont été reçues par les roulements, des efforts qui sont exercés par les moyens pour exercer sur les roulements des efforts axiaux et des efforts radiaux. Toutes ces mesures sont enregistrées par l'intermédiaire de moyens d'enregistrement connus en eux-mêmes de l'homme du métier. Ces moyens sont, par exemple, un micro-ordinateur 39.

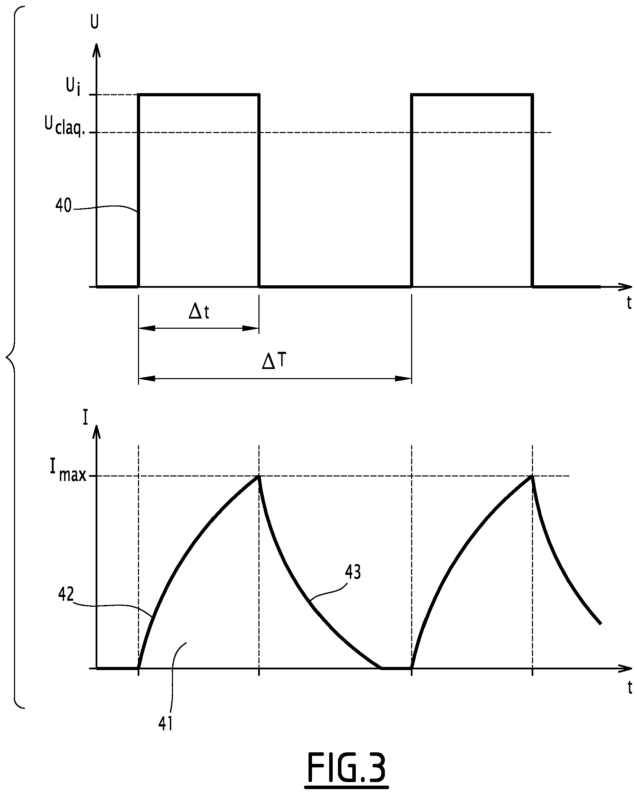

Comme on le voit à la Figure 3, les impulsions émises par le générateur d'impulsions sont caractérisées par des impulsions de tension 40 de forme généralement rectangulaire, ayant une durée Δt. Deux impulsions successives sont séparées par un intervalle de temps ΔT. La durée Δt définit la fréquence des impulsions, cette fréquence des impulsions étant 1/ Δt. L'intervalle de temps ΔT définit la fréquence de répétition des impulsions, cette fréquence est 1/ Δt. Comme on l'a indiqué précédemment la fréquence des impulsions 1/ Δt est réglable entre 0 et une dizaine de MHz, alors que la fréquence de répétition des impulsions donne 1/ ΔT, est réglable entre 0 et 500 kHz. Sur la figure, on a également représenté la forme des impulsions de courant : intensité en fonction du temps, qui résulte des impulsions de tension auxquelles sont soumis les paliers. Ces impulsions de courant 41 comportent une phase montée 42 correspondant à la phase pendant laquelle le palier est soumis à une tension, puis une phase de descente 43. L'intensité maximale Ui des impulsions de tension auxquelles est soumis le dispositif est choisie pour être toujours supérieure à la tension de claquage Uclaq des roulements, de façon à ce que les roulements soient toujours traversés par des décharges électriques. L'intensité des décharges électriques peut être réglée en agissant sur le potentiomètre 35.

Afin de tester la durée de vie des roulements de moteurs électriques à l'aide de ce banc d'essai, on monte sur le banc un roulement amont et un roulement aval d'un moteur électrique en les rendant solidaires de l'arbre d'entraînement. On soumet ces roulements à un effort axial et un effort radial qui correspondent aux efforts axiaux et radiaux de fonctionnement du moteur ou, d'une façon plus générale, des efforts auxquels on souhaite tester la durée de vie des roulements. Puis, on entraîne en rotation l'arbre d'entraînement en rotation 6 des roulements à une vitesse correspondant à la vitesse à laquelle on souhaite tester le fonctionnement du moteur et, à l'aide du générateur d'impulsions, on génère des impulsions correspondant à des impulsions représentatives des courants de fuite du moteur. On fait fonctionner le banc tout en enregistrant la température et les accélérations à l'aide des accéléromètres et des thermocouples. On fixe des seuils pour l'intensité des accélérations et éventuellement pour la température. Ces seuils permettant de déterminer un critère de détérioration des roulements. On fait alors fonctionner le banc d'essai et on détermine le temps au bout duquel les seuils fixés pour les vibrations, ou pour la température, sont atteints.

On peut ainsi tester la durée de vie des roulements et, plus généralement, étudier l'effet des différents paramètres de fonctionnement (vitesse, charge axiale, charge radiale, intensité et fréquence des courants de fuite) sur cette durée de vie.

On notera que l'invention est également adaptée pour étudier la durée de vie de roulements destinés à équiper des essieux, des ponts de transmission ou des boites d'essieu, qui voient également passer des courants parasites.

## Revendications

1. Dispositif pour tester l'influence de courants électriques de fuite sur la durée de vie de roulements destinés à un moteur électrique, comprenant :
- au moins un palier (2, 4) destiné à recevoir un roulement (3, 5) à tester ;
- un arbre (6) d'entraînement en rotation du roulement à tester coopérant avec un moteur (9) d'entraînement en rotation ;
**caractérisé en ce qu'**il comporte un moyen (11) pour générer des impulsions de courant électrique circulant entre le palier et l'arbre d'entraînement en passant à travers le roulement,ce moyen (11) pour générer des impulsions étant adapté pour régler la durée d'une impulsion pour correspondre à une fréquence pouvant aller jusqu'à 10 MHz, de préférence jusqu'à 100 kHz, le temps de montée de l'intensité étant inférieur à 5 µs, pour pouvoir régler la fréquence de répétition des impulsions électriques entre 0 et 500 kHz, de préférence 50 kHz et pouvoir régler l'amplitude du pic d'impulsions électriques entre 0 et 30A, de préférence 5A.

2. Dispositif selon la revendication 1, **caractérisé en ce qu'**il comprend au moins un moyen de mesure de vibrations (13, 15) et un moyen de mesure de température (14, 16) disposés sur le palier (2, 4) destiné à recevoir un roulement.

3. Dispositif selon la revendication 1 ou 2, **caractérisé en ce que** le moyen (11) pour générer des impulsions est adapté pour générer des impulsions de tension réglables entre 0 et 100 V, de préférence 30V, et **en ce qu'**il est relié à un circuit électrique permettant d'engendrer une tension entre un palier et l'arbre d'entraînement du roulement et comprenant un moyen de régalage de l'impédance (35).

4. Dispositif selon l'une quelconque des revendications 1 à 3, **caractérisé en ce qu'**il comprend un moyen (12) pour exercer un effort radial sur l'arbre d'entraînement du roulement et/ou un moyen (18) pour exercer un effort axial sur l'arbre d'entraînement du roulement.

5. Dispositif selon l'une quelconque des revendications 1 à 4, **caractérisé en ce qu'**il comporte deux paliers (2, 4) de réception d'un roulement de moteur électrique et **en ce que** le moyen pour générer des impulsions de courant électrique (11) est adapté pour faire circuler des impulsions électriques entre les paliers en passant à travers les roulements et dans l'arbre d'entraînement en rotation des roulements.

6. Dispositif selon la revendication 5, **caractérisé en ce que** le circuit électrique reliant les paliers au générateur d'impulsion comprend au moins une portion linéaire (33) s'étendant parallèlement à l'arbre d'entraînement des roulements et adaptée pour minimiser la self du circuit électrique.

7. Dispositif selon l'une quelconque des revendications 1 à 6, **caractérisé en ce qu'**il comprend des moyens d'enregistrement (39) des impulsions électriques, des vibrations des paliers, de la température des paliers, des efforts radiaux et/ou axiaux, de l'intensité, de la tension de la durée et de la fréquence des impulsions et au moins un moyen de commande de générateur d'impulsion, du moteur d'entraînement et, éventuellement, des moyens pour exercer des efforts radiaux et/ou axiaux.

8. Procédé pour tester l'influence d'un courant de fuite sur la durée de vie d'un roulement de moteur électrique, **caractérisé en ce qu'**on monte au moins un roulement sur un dispositif selon l'une quelconque des revendications 1 à 7, on met en route le moteur d'entraînement, on génère des impulsions de courant électrique en ajustant l'amplitude des impulsions de tension pour que la tension entre un palier et l'arbre d'entraînement de roulement soit supérieure à la tension de claquage du roulement, et en ajustant l'impédance du circuit d'alimentation électrique du palier et de l'arbre d'entraînement, on engendre éventuellement un effort radial et/ou un effort axial sur l'arbre d'entraînement, on enregistre les vibrations et la température du ou des paliers et on détermine le temps au bout duquel l'intensité des vibrations et/ou la température dépasse un seuil fixé à l'avance.

## Patentansprüche

1. Vorrichtung zum Testen des Einflusses elektrischer Kriechströme auf die Lebensdauer von Wälzlagern, die für einen Elektromotor bestimmt sind, aufweisend
- wenigstens einen Lagersitz (2, 4), der dazu bestimmt ein zu testendes Wälzlager (3, 5) aufzunehmen,
- eine Welle (6) zum Drehantreiben des zu testenden Wälzlagers, die mit einem Drehantriebs-Motor (9) zusammenwirkt,
**dadurch gekennzeichnet, dass** sie aufweist wenigstens ein Mittel (11) zum Erzeugen von elektrischen Strom-Impulsen, die zwischen dem Lagersitz und der Welle zum Antreiben zirkulieren unter Passieren durch das Wälzlager, wobei dieses Mittel (11) zum Erzeugen von Impulsen angepasst ist zum Regeln der Dauer eines Impulses zum Korrespondieren zu einer Frequenz, die bis 10 MHz, bevorzugt bis 100 kHz, gehen kann, wobei die Zeit des Anstiegs der Intensität kleiner als 5µs ist, zum Regeln-Können der Wiederholungsfrequenz der elektrischen Impulse zwischen 0 und 500 kHz, bevorzugt 50 kHz, und zum Regeln-Können der Amplitude der Spitze der elektrischen Impulse zwischen 0 und 30A, bevorzugt 5A.

2. Vorrichtung gemäß Anspruch 1, **dadurch gekennzeichnet, dass** sie aufweist wenigstens ein Mittel zum Messen von Vibrationen (13, 15) und ein Mittel zum Messen der Temperatur (14, 16), die an dem Lagersitz (2, 4) angeordnet sind, der dazu bestimmt ist ein Wälzlager aufzunehmen.

3. Vorrichtung gemäß Anspruch 1 oder 2, **dadurch gekennzeichnet, dass** das Mittel (11) zum Erzeugen von Impulsen angepasst ist zum Erzeugen von Spannungsimpulsen, die zwischen 0 und 100V, bevorzugt 30V, regelbar sind und dass sie mit einem elektrischen Schaltkreis verbunden ist, der es erlaubt eine Spannung zwischen einem Lagersitz und der Welle zum Antreiben des Wälzlagers zu generieren und der ein Mittel zum Regeln der Impedanz (35) aufweist.

4. Vorrichtung gemäß irgendeinem der Ansprüche 1 bis 3, **dadurch gekennzeichnet, dass** sie aufweist ein Mittel (12) zum Ausüben einer Radialkraft auf die Welle zum Antreiben des Wälzlagers und/oder ein Mittel (18) zum Ausüben einer Axialkraft auf die Welle zum Antreiben des Wälzlagers.

5. Vorrichtung gemäß irgendeinem der Ansprüche 1 bis 4, **dadurch gekennzeichnet, dass** sie aufweist zwei Lagersitze (2, 4) zur Aufnahme eines Wälzlagers eines Elektromotors und dass das Mittel zum Erzeugen von elektrischen Strom-Impulsen (11) angepasst ist zum Zirkulieren-Lassen der elektrischen Impulse zwischen den Lagersitzen unter Passieren durch die Wälzlager und in der Welle zum Drehantreiben der Wälzlager.

6. Vorrichtung gemäß Anspruch 5, **dadurch gekennzeichnet, dass** der elektrische Schaltkreis, der die Lagersitze mit dem Impulserzeuger verbindet, wenigstens einen linearen Abschnitt (33) aufweist, der sich parallel zu der Welle zum Antreiben der Wälzlager erstreckt und der angepasst ist zum Minimieren des Drosselwiderstands des elektrischen Schaltkreises.

7. Vorrichtung gemäß irgendeinem der Ansprüche 1 bis 6, **dadurch gekennzeichnet, dass** sie aufweist Mittel zur Aufzeichnung (39) der elektrischen Impulse, der Vibrationen der Lagersitze, der Temperatur der Lagersitze, der Radial- und/oder der Axialkraft, der Intensität, der Spannung, der Dauer und der Frequenz der Impulse und wenigstens ein Mittel zur Steuerung des Impulserzeugers, des Antriebsmotors und eventuell der Mittel zum Ausüben der Radial- und/oder Axialkraft.

8. Verfahren zum Testen des Einflusses eines Kriechstroms auf die Lebensdauer eines Wälzlagers eines elektrischen Motors, **dadurch gekennzeichnet, dass** man wenigstens ein Wälzlager in eine Vorrichtung gemäß irgendeinem der Ansprüche 1 bis 7 montiert, man den Antriebsmotor laufen lässt, man elektrische Strom-Impulse erzeugt bei Einstellen der Amplitude der Spannungs-Impulse, sodass die Spannung zwischen einem Lagersitz und der Welle zum Wälzlager-Antreiben größer als die Durchschlagsspannung des Wälzlagers ist, und bei Einstellen der Impedanz des Schaltkreises zur elektrischen Versorgung des Lagersitzes und der Welle zum Antreiben, man eventuell eine Radialkraft und/oder eine Axialkraft auf die Welle zum Antreiben generiert, man die Vibrationen und die Temperatur des oder der Lagersitze aufzeichnet und man die Zeit ermittelt, nach welcher die Intensität der Vibrationen und/oder die Temperatur eine vorfestgelegte Grenze überschreitet.

## Claims

1. A device for testing the influence of electric leakage currents on the lifetime of rolling bearings intended for an electric motor comprising:
- at least one bearing (2, 4) intended to receive a rolling bearing (3, 5) to be tested;
- a shaft (6) for driving into rotation the rolling bearing to be tested cooperating with a rotary drive motor (9);
**characterized in that** it comprises a mean (11) for generating electric current pulses circulating between the bearing and the driving axis by passing through the rolling bearing, this mean (11) for generating pulses being adapted for adjusting the duration of a pulse so as to correspond to a frequency which may range up to 10 MHz, preferably up to 100 kHz, the rise time of the intensity being less than 5 µs, so as to be able to adjust the repetition frequency of the electric pulses between 0 and 500 kHz, preferably 50 kHz and to be able to adjust the amplitude of the peak of electric pulses between 0 and 30A, preferably 5A.

2. The device according to claim 1, **characterized in that** it comprises at least one means for measuring vibrations (13, 15) and one means for measuring temperature (14, 16) positioned on the bearing (2, 4) intended to receive a rolling bearing.

3. The device according to claim 1 or 2, **characterized in that** the means (11) for generating pulses is adapted for generating voltage pulses adjustable between 0 and 100 V, preferably 30V, and **in that** it is connected to an electric circuit with which a voltage may be generated between a bearing and the shaft for driving the rolling bearing and comprising a means for adjusting the impedance (35).

4. The device according to any of claims 1 to 34, **characterized in that** it comprises a means (12) for exerting a radial force on the shaft for driving the rolling bearing and/or a means (18) for exerting an axial force on the shaft for driving the rolling bearing.

5. The device according to any of claims 1 to 4, **characterized in that** it includes two bearings (2, 4) for receiving an electric motor rolling bearing and **in that** the means for generating electric current pulses (11) is adapted for circulating electric pulses between the bearings passing through the rolling bearings and into the shaft for driving the rolling bearings into rotation.

6. The device according to claim 5, **characterized in that** the electric circuit connecting the bearings to the pulse generator comprises at least one linear portion (33) extending parallel to the shaft for driving the rolling bearings and adapted so as to minimize the inductance of the electric circuit.

7. The device according to any of claims 1 to 6, **characterized in that** it comprises means (39) for recording electric pulses, vibrations of the bearings, temperature of the bearings, radial and/or axial forces, intensity, voltage, duration and frequency of the pulses and at least one means for controlling the pulse generator, the driving motor and optionally means for exerting radial and/or axial forces.

8. A method for testing the influence of a leakage current on the lifetime of an electric motor rolling bearing, **characterized in that** at least one rolling bearing is mounted on a device according to any of claims 1 to 7, the driving motor is started, electric current pulses are generated by adjusting the amplitude of the voltage pulses so that the voltage between a bearing and the shaft for driving the rolling bearing is greater than the breakdown voltage of the rolling bearing, and by adjusting the impedance of the electric power supply of the bearing and of the driving shaft, a radial force and/or an axial force is optionally generated on the driving shaft, the vibrations and the temperature of the bearing(s) are recorded and the time at the end of which the intensity of the vibrations and/or the temperature exceeds a threshold set in advance, is determined.
